# EUROPÄISCHE PATENTSCHRIFT

(11) **EP 3 086 942 B1**
(45) Veröffentlichungstag und Bekanntmachung des Hinweises auf die Patenterteilung: **21.02.2018**
(21) Anmeldenummer: 14823984.1
(22) Anmeldetag: 19.12.2014
(51) Int. Cl.: B32B 17/06, B32B 37/00, B32B 37/12

(54) **SCHICHTENVERBUND MIT MINERALISCHEM WERKSTOFF UND GLAS UND VERFAHREN ZU DESSEN HERSTELLUNG**
LAYER ASSEMBLY COMPRISING MINERAL MATERIAL AND GLASS AND METHOD FOR THE PRODUCTION THEREOF
COMPOSITE MULTICOUCHE COMPRENANT UN MATÉRIAU MINÉRAL ET DU VERRE ET PROCÉDÉ POUR SA FABRICATION

(30) Priorität: 23.12.2013 DE 102013114856
(43) Veröffentlichungstag der Anmeldung: 02.11.2016
(73) Patentinhaber: Thomas Hofberger GmbH, 82024 Taufkirchen (DE)
(72) Erfinder: HOFBERGER, Thomas, 82024 Taufkirchen (DE)
(74) Vertreter: Michalski Hüttermann & Partner Patentanwälte mbB
(86) Internationale Anmeldenummer: PCT/EP2014/078904
(87) Internationale Veröffentlichungsnummer: WO 2015/097111

(56) Entgegenhaltungen:
- EP-A2- 2 236 287
- WO-A2-2009/091923
- WO-A2-2011/024083

## Beschreibung

Die vorliegende Erfindung betrifft ein Verfahren zur Herstellung eines Schichtenverbundes umfassend ein Substrat, eine Deckschicht und eine zwischen Substrat und Deckschicht angeordnete Klebstoffschicht, wobei die Klebstoffschicht das Substrat und die Deckschicht zumindest teilweise kontaktiert.

Verbundelemente aus Natursteinplatten und dekorativen oder schützenden Deckschichten sind Gegenstand intensiver Entwicklungsarbeiten. Dieses liegt unter anderem in dem Wunsch begründet, die dekorativen Eigenschaften des Natursteins in Umgebungen nutzen zu können, die aufgrund der vielen Natursteinmaterialien innewohnenden Eigenschaften wie Porosität, Vorliegen von Kapillarnetzwerken oder Chemikalienempfindlichkeit nicht ohne Weiteres in Frage kommen.

EP 0 799 949 A1 offenbart ein Natursteinelement aus mindestens einer dünnen Natursteinplatte und einer damit großflächig verbundenen Tragplatte, wobei die Tragplatte aus wenigstens einer Glasscheibe besteht, die mittels einer vorzugsweise transparenten Gießharzschicht mit der Natursteinplatte verbunden ist, und die Natursteinelemente untereinander bzw. an einem Trägerelement befestigt sind.

DE 602 02 302 T2 (hervorgegangen aus WO 03/018310) beschreibt ein Verfahren zur Herstellung einer Verbundplatte, die eine Platte aus Gestein und eine Glasscheibe, die aneinandergefügt sind, beinhaltet und folgende Verfahrensschritte aufweist: Bereitstellung einer Gesteinsplatte; Beschichtung mindestens eines zentralen Bereichs der Oberfläche jener Platte aus Gestein mit einer Schicht aus wärmeaushärtendem Reaktionsharz in flüssigem Zustand; Bereitstellung einer Glasscheibe oberhalb jener Gesteinsplatte, wobei die Oberfläche jener der Gesteinsplatte gegenüberliegenden Glasscheibe in eine konvexe Form gezwungen wird; Verbringung jener Glasscheibe in die Nähe der Gesteinsplatte, wobei dabei ein zentraler Bereich der Scheibe in Kontakt mit dem auf einem entsprechenden zentralen Bereich der Gesteinsplatte vorhandenen Harz gebracht wird; graduelles Absenken der konvexen Form der Glasscheibe bis die Wölbung zu Null wird, wobei die Glasscheibe zur Adhäsion mit der Gesteinsplatte, gebracht wird und jenes Harz gleichmäßig zwischen der Platte und der Scheibe verteilt wird und gleichmäßiges Verpressen jener Gesteinsplatte mit der Glasscheibe während der Aushärtung des wärmeaushärtenden Harzes.

WO 2008/017287 A1 betrifft ein Stein-Glas-Element mit mindestens einer Steinplatte und einer Tragplatte, die mindestens eine Glasscheibe umfasst, welche mittels einer transparenten oder opaken Gießharzschicht großflächig mit der Steinplatte verbunden ist, wobei die der Tragplatte (1) gegenüberliegende Oberfläche der Steinplatte mit einer Feuchtigkeit abweisenden Abdeckschicht und/oder einer Abdeckplatte versehen ist. Die Steinplatte weist parallel zu mindestens einer Seitenkante einen Kapillarschnitt auf, der mit einem Dichtstoff ausgefüllt ist, welcher eine Feuchtigkeitsdiffusion in Richtung auf das Innere der Steinplatte verhindert.

DE 10 2008 052 066 A1 offenbart einen Gegenstand, enthaltend ein scheibenförmiges Verbund material mit zwei Hauptflächen und einer umlaufenden Randfläche, enthaltend, in der angegebenen Reihenfolge übereinander liegend und haftfest miteinander verbunden, eine erste mechanisch stabile, transparente Schicht, eine erste transparente, reißfeste, haftvermittelnde Schicht, eine von flüchtigen Verbindungen im Wesentlichen oder völlig freie, opake oder transluzente Steinschicht, - eine zweite transparente, reißfeste, haftvermittelnde Schicht und eine zweite mechanisch stabile, transparente Schicht, sowie eine Rundum-Versiegelung der umlaufenden Randfläche.

Das Verfahren zur Herstellung dieses Gegenstands ist dadurch gekennzeichnet, dass man eine transluzente oder opake Steinschicht im Wesentlichen oder völlig von flüchtigen Verbindungen befreit, beidseitig über jeweils eine transparente, reißfeste, haftvermittelnde Schicht mit jeweils einer mechanisch stabilen, transparenten Schicht haftfest verbindet, wodurch ein scheibenförmiges, transluzentes Verbundmaterial mit zwei Hauptflächen und einer umlaufenden Randfläche resultiert, und die umlaufende Randfläche mit einer Rundum-Versiegelung versieht.

Verwendung findet der Gegenstand laut dieser Patentanmeldung als dekorativer und/oder architektonischer Gegenstand und/oder dekoratives und/oder architektonisches Bauteil für den Innen- und Außenbereich oder für dessen Herstellung.

DE 10 2005 014 945 A1 offenbart eine Wandverkleidung auf Glasbasis, insbesondere in Form von Fliesen, zum Verkleiden von Wänden, wie Mauern, Böden oder Decken eines Wohnraums, mit einem Glassubstrat, das auf einer an den Wänden anzubringenden Fläche mit einer Lackschicht beschichtet ist, wobei der besagte Lack als Schutzschicht gegen korrosive Angriffe eine derartig geringe Wasserdurchlässigkeit aufweist, dass die besagte Verkleidung auf den Wänden mithilfe von gewöhnlichen, mit Wasser angerührten Mörtel-Klebern oder Zement- Klebern befestigt werden kann.

WO 2009/091923 A2 beschreibt ein Verfahren zum Laminieren von Substraten, umfassend die Schritte: Ablegen einer Schicht eines druckempfindlichen Klebstoffs zwischen einer im Wesentlichen planaren Oberfläche eines ersten Substrats und einer im Wesentlichen planaren Oberfläche eines zweiten Substrats; Anordnen des ersten Substrats, der Schicht des druckempfindlichen Klebstoffs und des zweiten Substrats in einer Vakuumkammer; Evakuieren der Vakuumkammer und Einwirken von Druck auf wenigstens einem ausgewählt aus dem ersten un dem zweiten Substrat.

Während der Verklebung von Natursteinplatten mit Glasdeckschichten können in den verwendeten Klebstoff Luftblasen eingetragen werden. Die Hauptquellen für solche Luftblasen sind Mischvorgänge beim Einsatz von Zweikomponenten-Klebstoffen und das Einfüllen des Klebstoffs in den Spalt zwischen Natursteinplatte und Glasdeckschicht.

In der ausgehärteten Klebstoffschicht eingeschlossene Luftblasen sind aus zwei Gründen unerwünscht. Einerseits führen sie mechanische Schwachstellen in der Verklebung ein. Weiterhin stören sie das ästhetische Erscheinungsbild des Verbundartikels, welches insbesondere im Bereich der hochwertigen Inneneinrichtungs-Gegenstände vom Kunden nicht toleriert wird.

Die vorliegende Erfindung hat sich die Aufgabe gestellt, die angesprochenen Nachteile im Stand der Technik zumindest teilweise zu beheben. Im Speziellen hat sie sich die Aufgabe gestellt, ein Verfahren zur Herstellung solcher Verbundelemente bereitzustellen, bei dem eine im Wesentlichen luftblasenfreie Verklebung erreicht werden kann. Das Klebeverfahren sollte weiterhin geeignet sein, um auf einfache Weise Funktionselemente oder Funktionsschichten noch in das Verbundelement aufnehmen zu können.

Erfindungsgemäß gelöst wird diese Aufgabe durch ein Verfahren gemäß Anspruch 1. Vorteilhafte Weiterbildungen der Erfindung sind in den jeweiligen Unteransprüchen angegeben. Sie können beliebig miteinander kombiniert werden, sofern sich aus dem Kontext nicht eindeutig das Gegenteil ergibt.

Die Erfindung betrifft somit ein Verfahren zur Herstellung eines Schichtenverbundes, wobei der Schichtenverbund ein Substrat, eine Deckschicht und eine zwischen Substrat und Deckschicht angeordnete Klebstoffschicht umfasst und die Klebstoffschicht das Substrat und die Deckschicht zumindest teilweise kontaktiert, umfassend die Schritte:
A) Bereitstellen einer Anordnung, welche ein Substrat und eine Deckschicht umfasst, wobei
   das Substrat eine erste Substratseite mit einer in vertikaler Richtung gesehen oberen Substratkante, einer in vertikaler Richtung gesehen unteren Substratkante, einer ersten Substrat-Seitenkante und einer der ersten Substrat-Seitenkante gegenüberliegenden zweiten Substrat-Seitenkante umfasst;
   die Deckschicht eine erste Deckschichtseite mit einer in vertikaler Richtung gesehen oberen Deckschichtkante, einer in vertikaler Richtung gesehen unteren Deckschichtkante, einer ersten Deckschicht-Seitenkante und einer der ersten Deckschicht-Seitenkante gegenüberliegenden zweiten Deckschicht-Seitenkante umfasst;
   die erste Substratseite und die erste Deckschichtseite in der Anordnung mit einem Winkel α einander zugewandt sind und eine Winkelhalbierende des Winkels α ausgebildet wird;
   die obere Substratkante und die obere Deckschichtkante in der Anordnung einander gegenüber liegen;
   die untere Substratkante und die untere Deckschichtkante in der Anordnung einander gegenüber liegen;
   die erste Substrat-Seitenkante und die erste Deckschicht-Seitenkante in der Anordnung einander gegenüber liegen;
   die zweite Substrat-Seitenkante und die zweite Deckschicht-Seitenkante in der Anordnung einander gegenüber liegen;
   in der Anordnung der Abstand der oberen Substratkante zur oberen Deckschichtkante größer als der Abstand der unteren Substratkante zur unteren Deckschichtkante ist;
   in der Anordnung zwischen der unteren Substratkante und der unteren Deckschichtkante eine erste Dichtung vorgesehen ist, welche den Austritt von Fluiden zwischen unterer Substratkante und unterer Deckschichtkante verhindert;
   in der Anordnung zwischen der ersten Substrat-Seitenkante und der ersten Deckschicht-Seitenkante eine zweite Dichtung vorgesehen ist, welche den Austritt von Fluiden zwischen erster Substrat-Seitenkante und erster Deckschicht-Seitenkante verhindert;
   in der Anordnung zwischen der zweiten Substrat-Seitenkante und der zweiten Deckschicht-Seitenkante eine dritte Dichtung vorgesehen ist, welche den Austritt von Fluiden zwischen zweiter Substrat-Seitenkante und zweiter Deckschicht-Seitenkante verhindert;
   so dass die Anordnung einen einseitig geöffneten Behälter zur Aufnahme von Fluiden ausbildet und in diesem Behälter weiterhin ein zur Aushärtung befähigter Klebstoff vorliegt;
B) Verschwenken des Substrats und der Deckschicht aufeinander zu, so dass der Abstand der oberen Substratkante zur oberen Deckschichtkante abnimmt und der Klebstoff in Richtung der oberen Substratkante und der oberen Deckschichtkante bewegt wird;
wobei der Schritt B) derart durchgeführt wird, dass während zumindest eines Teils des Schritts B) die Winkelhalbierende des Winkels α gegenüber der Vertikalen einen Winkel von ≥ -45° bis ≤ 45° einnimmt.

Es wurde überraschenderweise gefunden, dass sich durch die Vorgehensweise im erfindungsgemäßen Verfahren, in der die Annäherung des zu verklebenden Substrats und der Deckschicht (vereinfacht und beispielhaft ausgedrückt) aufrecht stehend erfolgt, etwaige Luftblasen im flüssigen Klebstoff nach oben steigen und aus dem Klebespalt entweichen können.

Das erfindungsgemäße Verfahren ist auch für weniger erfahrene Anwender einfach durchzuführen. Dadurch, dass zu Beginn der Verklebung Substrat und Deckschicht "V"-förmig zueinander stehen, können Funktionselemente und/oder Dekorationselemente auf einfache Weise eingelegt und mit verklebt werden.

Nach Schritt B) im Verfahren können sich noch weitere Schritte wie Drehen des Schichtenverbundes in die Horizontale, Verpressen, Aushärten des Klebstoffs durch Erwärmen oder Bestrahlung, etc. anschließen.

Die vorliegende Erfindung wird anhand der nachfolgenden Figuren weiter erläutert, ohne jedoch darauf beschränkt zu sein.

Es zeigen:
FIG. 1 eine Anordnung im erfindungsgemäßen Verfahren in Ansicht von schräg oben
FIG. 2 eine Anordnung im erfindungsgemäßen Verfahren in Ansicht von schräg unten
FIG. 3 eine Anordnung im erfindungsgemäßen Verfahren in seitlicher Querschnittsansicht
FIG. 4 die Anordnung aus FIG. 3 im weiteren Fortgang des erfindungsgemäßen Verfahrens
FIG. 5 die Anordnung aus FIG. 4 im weiteren Fortgang des erfindungsgemäßen Verfahrens
FIG. 6 eine weitere Anordnung im erfindungsgemäßen Verfahren in seitlicher Querschnittsansicht
FIG. 7 einen Schichtenverbund in seitlicher Querschnittsansicht
FIG. 8 einen weiteren Schichtenverbund
FIG. 9-21 weitere Anordnungen in einem erfindungsgemäßen Verfahren

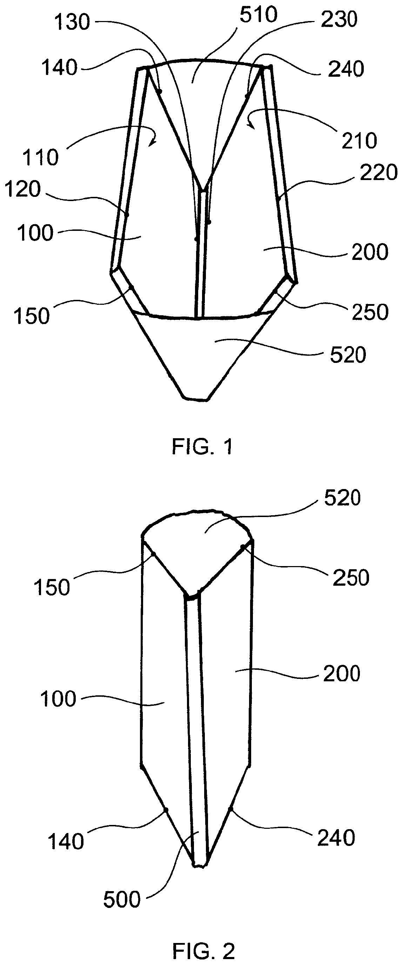

FIG. 1 zeigt eine Anordnung zur Verwendung im erfindungsgemäßen Verfahren, anhand derer einige räumliche Verhältnisse und geometrische Definitionen erläutert werden sollen. Zur besseren Übersicht ist in FIG. 1 jedoch kein in der Anordnung vorliegender Klebstoff abgebildet.

Wie bereits beschrieben wird im erfindungsgemäßen Verfahren eine Anordnung eines Substrats und einer Deckschicht bereitgestellt. Der Weg zum Aufbau dieser Anordnung, beispielsweise die einzelnen Schritte und ihre Reihenfolge, ist dabei nicht festgelegt.

In der Anordnung wie in FIG. 1 gezeigt liegen ein Substrat 100 und eine Deckschicht 200 vor. Das Substrat weist eine erste Substratseite 110 auf. Diese erste Substratseite 110 wird im späteren Verlauf mit der korrespondierenden ersten Deckschichtseite 210 der Deckschicht 200 verklebt werden.

An den beteiligten Substrat- beziehungsweise Deckschichtseiten werden verschiedene Kanten definiert. Die erste Substratseite 110 weist eine in vertikaler Richtung (entgegen der Schwerkraft) gesehen obere Substratkante 120 und einer ihr entgegengesetzte, in vertikaler Richtung gesehen untere Substratkante 130 auf. In dem in FIG. 1 gezeigten Fall verlaufen diese Kanten horizontal. An den oberen und unteren Substratkanten 120, 130 anliegend befinden sich die Substrat-Seitenkanten 140 und 150, welche hier vertikal verlaufen.

Ebenso weist die erste Deckschichtseite 210 eine obere Deckschichtkante 220, eine untere Deckschichtkante 230 und zwei Deckschicht-Seitenkanten 240, 250 auf, welche sich gegenüber liegen.

Die erste Substratseite 110 und die erste Deckschichtseite 210 sind einander zugewandt, so dass Substrat 200 und Deckschicht 210 ein annähernd "V"-förmiges Gebilde darstellen. Die obere Substratkante 120 und die obere Deckschichtkante 220 sowie die untere Substratkante 130 und die untere Deckschichtkante 230 liegen einander gegenüber. Genauso liegen die erste Substrat-Seitenkante 140 und erste Deckschicht-Seitenkante 240 sowie die zweite Substrat-Seitenkante 150 und die zweite Deckschicht-Seitenkante 250 einander gegenüber.

In Übereinstimmung mit der Beschreibung des Gebildes als "V"-förmig ist der Abstand der oberen Substratkante 120 zur oberen Deckschichtkante 220 größer als der Abstand der unteren Substratkante 130 zur unteren Deckschichtkante 230.

Durch den Einsatz von Dichtungsmitteln wird das "V"-förmige Gebilde zu einem nach oben geöffneten Behälter oder, bildlich gesprochen, zu einem Trog. Diese Dichtungsmittel dichten die Lücken zwischen den sich gegenüberliegenden Kanten von Substrat 100 und Deckschicht 200 ab.

Hier dichten eine zweite Dichtung 510 zwischen erster Substrat-Seitenkante 140 und erster Deckschicht-Seitenkante 240 sowie eine dritte Dichtung 520 zwischen zweiter Substrat-Seitenkante 150 und zweiter Deckschicht-Seitenkante ab.

Dass die Anordnung im erfindungsgemäßen Verfahren einseitig geöffnet und insbesondere "nach oben offen" ausgeführt ist, bedeutet, dass ausweichender Klebstoff genug Raum findet, um den zwischen Substrat 100 und Deckschicht 200 gebildeten Spalt zu verlassen. Mit eingeschlossen in den Fall des einseitig geöffnet seins ist, dass die Anordnung rundum abgedeckt ist, aber der Klebstoff wie gesagt entweichen kann.

FIG. 2 zeigt die Anordnung aus FIG. 1 in Ansicht von schräg unten. Man erkennt wieder das Substrat 100 und die Deckschicht 200, die Seitenkanten 140, 150, 240 und 250 sowie eine der seitlichen Dichtungen 520. Ebenfalls erkennt man nun die erste Dichtung 500, welche den Austritt von Fluiden (insbesondere Klebstoff) zwischen der unteren Kante des Substrats und der Deckschicht verhindert.

Die erste Dichtung 500, zweite Dichtung 510 und dritte Dichtung 520 sind beispielsweise durch Überlappung derart ausgestaltet, dass insgesamt die Anordnung einen nach oben geöffneten Behälter darstellt, welcher einen Klebstoff aufnehmen kann. Sie können jedoch auch kombiniert werden und beispielsweise insgesamt als ein Dichtungsstück vorliegen.

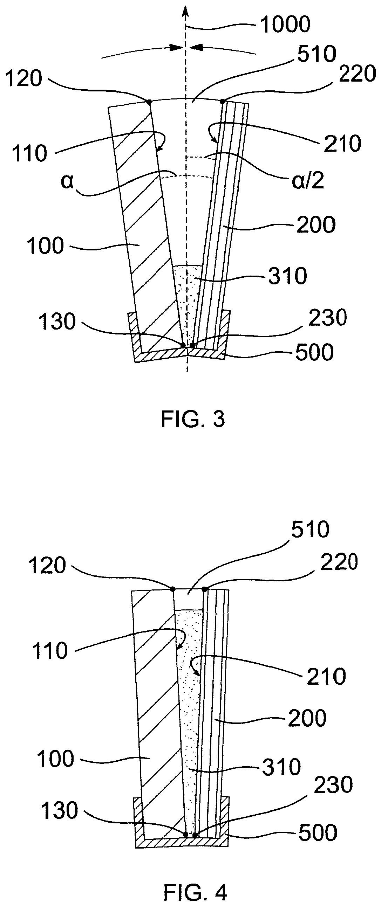

FIG. 3 zeigt eine Querschnittsansicht der in FIG. 1 und FIG. 2 gezeigten Anordnung, wobei nun weiterhin ein zur Aushärtung befähigter Klebstoff 310 in dem gebildeten, nach oben offenen Behälter vorliegt. Der Klebstoff kontaktiert somit bereits wenigstens teilweise die erste Substratseite 110 und die erste Deckschichtseite 210.

Dessen Austritt aus dem Behälter wird durch die vorliegenden Dichtungen verhindert. Aufgrund der Querschnittsansicht ist in FIG. 3 die Dichtung 520 aus FIG. 1 und 2 nicht abgebildet. Ob der Klebstoff 310 in den fertig aufgebauten "Trog" aus Substrat 100, Deckschicht 200 und Dichtungen 500, 510, 520 eingefüllt wird oder ob er beispielsweise schon auf Substrat und/oder Deckschicht vorliegt und dann der "Trog" aufgebaut wird, ist für das erfindungsgemäße Verfahren einerlei.

Geeignete Klebstoffe im erfindungsgemäßen Verfahren sind vorzugsweise transparent, insbesondere Zweikomponenten-Klebstoffe wie Epoxy- und Polyurethanharze sowie strahlenhärtende Klebstoffe wie (Meth)Acrylate und Urethan(meth)acrylate. Unter den Epoxy-Harzen sind solche mit cycloaliphatischen Polyaminhärtern bevorzugt.

Zwischen der ersten Substratseite 110 und der ersten Deckschichtseite 210 wird ein Winkel α ausgebildet. Dementsprechend lässt sich eine Winkelhalbierende 1000 konstruieren.

Im erfindungsgemäßen Verfahren erfolgt ein Verschwenken des Substrats 100 und der Deckschicht aufeinander zu. Hierbei nimmt zumindest der Abstand der oberen Substratkante 120 zur oberen Deckschichtkante 220 zu. Bildlich gesprochen lässt sich dieses mit dem Zuklappen eines Buches vergleichen. Der "Buchrücken" wird hierbei von den unteren Kanten 130, 230 und der unteren ersten Dichtung 500 gebildet. Das Verschwenken wird in FIG. 3 durch die beiden gekrümmten Pfeile symbolisiert.

Das Verschwenken des Substrats 100 und der Deckschicht 200 aufeinander zu hat die Folge, dass der zwischen ihnen angeordnete Klebstoff immer weiter den Spalt zwischen Substrat 100 und Deckschicht 200 entlanggedrückt wird. Somit wird er auch immer weiter in Richtung der oberen Substratkante 120 und der oberen Deckschichtkante 120 bewegt.

Es ist weiterhin im erfindungsgemäßen Verfahren vorgesehen, dass während zumindest eines Teils des Schritts B (Verschwenken) die Winkelhalbierende 1000 des Winkels α einen Winkel von ≥ - 45° bis ≤ 45° gegenüber der Vertikalen einnimmt. Auf diese Weise wird erreicht, dass Öffnung der Anordnung stets nach oben zeigt, so dass im Klebstoff eingeschlossene Luftblasen auch nach oben aufsteigen können und den Spalt zwischen Substrat 100 und Deckschicht 200 verlassen können. Vorzugsweise nimmt hierbei die Winkelhalbierende 1000 des Winkels α einen Winkel von ≥ -30° bis ≤ 30°, mehr bevorzugt ≥ -15° bis < 15° gegenüber der Vertikalen ein. Dann lässt sich von einer "stehenden Verklebung" des Substrats 100 und der Deckschicht 200 sprechen.

In FIG. 3 weist die Winkelhalbierende 1000 einen Winkel von 0° zur Vertikalen auf. Negative Winkel bedeuten in diesem Fall, dass die Winkelhalbierende 1000 nach links geneigt ist; positive Winkel symbolisieren eine Neigung in die andere Richtung. Insofern ist das Vorzeichen des Neigungswinkels auch abhängig vom Betrachtungsstandpunkt.

Die untere Substratkante 130 und die untere Deckschichtkante 230 müssen sich nicht unbedingt berühren. Dadurch, dass die erste Dichtung 500 vorhanden ist, können sie auch voneinander beabstandet angeordnet sein. Ihr Abstand kann unter Berücksichtigung der gewünschten Dicke der Klebstoffschicht im fertigen Schichtenverbund gewählt werden.

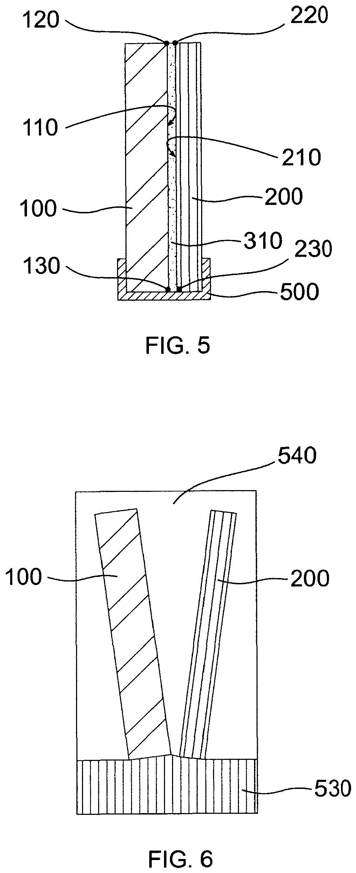

Der Vorgang des Hinaufbewegens des Klebstoffs 310 durch Verschwenken von Substrat 100 und Deckschicht 200 aufeinander zu wird mittels FIG. 4 als Zwischenstufe und FIG. 5 als Endzustand noch weiter bildlich dargestellt. Überschüssiger Klebstoff einschließlich darin befindlicher, nach oben aufgestiegener Gasblasen können an den oberen Kanten 120, 220 abgestreift oder auf sonstige Weise entfernt werden.

Es ist möglich, Substrat und/oder Deckschicht vorzubehandeln. So können Glasoberflächen benetzbarer gemacht werden und poröse Natursteinoberflächen vorversiegelt werden.

In einer Ausführungsform des erfindungsgemäßen Verfahrens sind die erste Substratseite 110 und/oder die erste Deckschichtseite 210 planar. Der Begriff "planar" schließt Oberflächenunebehneiten und Bearbeitungsspuren (gewollt und ungewollt) mit ein, welche dann mit Klebstoff verfüllt werden. Dieses ist die bevorzugte Variante, obwohl das erfindungsgemäße Verfahren durchaus mit nicht-planaren Oberflächen durchgeführt werden kann, sofern die Menge des eingesetzten Klebstoffs entsprechend angepasst wird.

In einer weiteren Ausführungsform des erfindungsgemäßen Verfahrens sind das Substrat 100 und/oder die Deckschicht 200 quaderförmig ausgebildet. Auf diese Weise können bereits zugeschnittene Substrat- und/oder Deckschichtplatten eingesetzt werden.

In einer weiteren Ausführungsform des erfindungsgemäßen Verfahrens umfasst das Substrat 100 einen mineralischen Werkstoff umfasst und/oder die Deckschicht 100 umfasst ein Glas. Geeignete mineralische Werkstoffe sind beispielsweise Stein, Naturstein, Beton, Gips und dergleichen. Beispiele für geeignete Gläser sind E-Glas, S-Glas, M-Glas, Quarzglas, Borosilikatglas, Kronglas, Kalk-Natron-Glas, Floatglas, Flintglas und/oder Bleikristallglas. Das Glas kann gefärbt sein, aber eine transparente Glas-Deckschicht ist bevorzugt. Unter "Naturstein" versteht man ganz allgemein alle Gesteine, wie man sie in der Natur vorfindet. Bevorzugte Natursteine sind Granit, Marmor, Quarz, Quarzkomposit, Travertin, Sandstein, Schiefer und Achat.

Vorzugsweise umfasst das Substrat 100 einen Naturstein und die Deckschicht 200 ein Glas.

In einer weiteren Ausführungsform des erfindungsgemäßen Verfahrens umfasst das Substrat 100 eine elektrische Funktionseinheit und die Deckschicht 200 umfasst ein Glas. Vorzugsweise handelt es sich bei den elektrischen Funktionseinheiten um Anzeigevorrichtungen wie TFT- oder LED-Anzeigen, Sensorvorrichtungen wie Helligkeitssensoren, Temperatursensoren oder kapazitive Sensoren (sogenannte "Touch"-Sensoren) oder Heizvorrichtungen, insbesondere Vorrichtungen zum induktiven Heizen. Dann können ästhetisch sehr ansprechende Induktionskochfelder hergestellt werden.

In einer weiteren Ausführungsform des erfindungsgemäßen Verfahrens sind die erste Dichtung 500, die zweite Dichtung 510 und/oder die dritte Dichtung 520 in Form einer elastischen Folie ausgeführt. Vorzugsweise sind die elastischen Folien selbstklebend, so dass sie auf einfache Weise mit den jeweiligen Kanten von Substrat 100 und Deckschicht 200 verbunden werden können. Das Ausmaß der Elastizität sollte so sein, dass eine an den unteren Kanten 130, 230 als untere Dichtung 500 angebrachte Folie auch der Auseinanderbewegung des unteren Bereichs von Substrat 100 und Deckschicht 200 (bedingt durch die Präsenz des Klebstoffs 310) beim Zusammenklappen folgen kann, ohne die Abdichtwirkung zu verlieren. Hinsichtlich der seitlichen Dichtungen 510, 520 sollte die Folie wenigstens so flexibel sein, um sich nach Außen bewegen zu können, wenn Substrat 100 und Deckschicht 200 zusammengeklappt werden.

In einer weiteren Ausführungsform des erfindungsgemäßen Verfahrens sind die erste Dichtung, die zweite Dichtung und/oder die dritte Dichtung in Form von elastomeren Flächenabschnitten ausgeführt, gegenüber denen das Substrat und die Deckschicht beweglich sind. Dieses ist in FIG. 6 schematisch dargestellt, wobei aufgrund der Querschnittsansicht eine Dichtung nicht gezeigt ist. Aus Gründen der Übersichtlichkeit ist der Klebstoff ebenfalls nicht gezeigt. Diese Ausführungsform basiert auf dem Konzept, dass während des Zusammenklappens von Substrat 100 und Deckschicht 200 diese derart an den Dichtungen (gezeigt: 530, 540) anliegen, dass bei einer Relativbewegung von Substrat und/oder Deckschicht zu den Dichtungen immer noch eine Abdichtung gegenüber austretenden Fluiden, insbesondere Klebstoff, erreicht wird. Durch diese Ausführungsform können die Dichtungen wiederverwendet werden. In FIG. 6 ist auch schematisch dargestellt, dass die untere Dichtung 530 so weich ist, dass sie den Konturen von Substrat und Deckschicht an deren Unterseiten folgt und auch während des Zusammenklappens für eine Dichtwirkung sorgt.

In einer weiteren Ausführungsform des erfindungsgemäßen Verfahrens sind die erste Dichtung, die zweite Dichtung und/oder die dritte Dichtung in Form eines fluidisch expandierbaren Dichtungselements ausgeführt, gegenüber denen das Substrat 100 und die Deckschicht 200 beweglich sind. Diese Variante ist mit der zuvor geschilderten Variante der elastischen Flächenelemente verwandt. Auch hier wird es ermöglicht, die Dichtungen wiederzuverwenden und die Verklebung maschinell durchführen zu können. Die Expansion der Dichtungen, die sich vereinfacht als "Dichtungskissen" ansehen lassen, kann durch Aufpumpen mit Luft oder auf hydraulischem Wege geschehen.

In einer weiteren Ausführungsform des erfindungsgemäßen Verfahrens wird weiterhin zwischen Substrat 100 und Deckschicht 200 eine Dekorschicht bereitgestellt. So können Logos, Werbematerialien, etc. in den Schichtenverbund integriert werden.

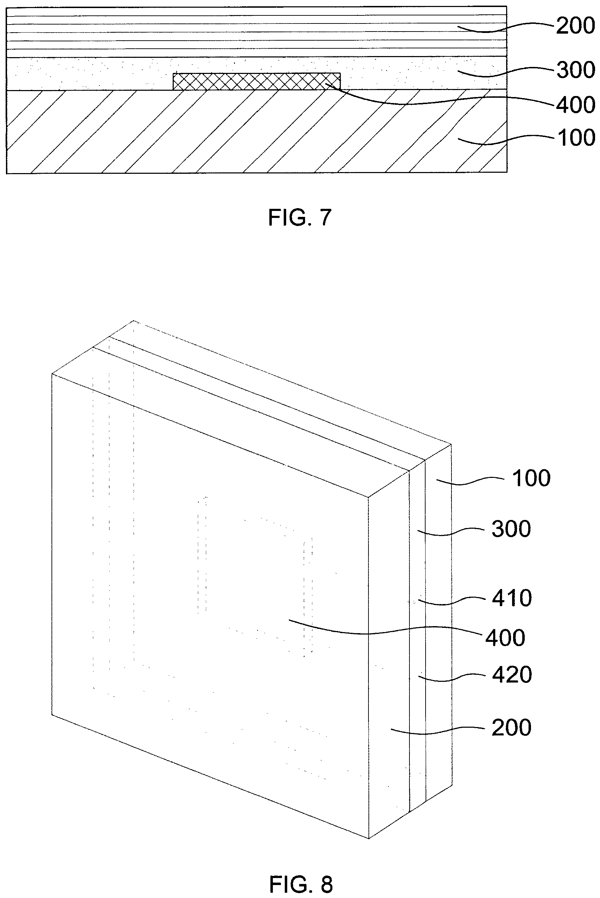

In einer weiteren Ausführungsform des erfindungsgemäßen Verfahrens wird weiterhin zwischen Substrat 100 und Deckschicht 200 eine elektrische Funktionseinheit 400 (s. FIG. 7) bereitgestellt. Die elektrische Funktionseinheit kann in die Anordnung vor oder nach Einfüllen des Klebstoffs eingelegt werden und dann beim Verschwenken gemäß Schritt B) in den erhaltenen Schichtenverbund integriert werden. Vorzugsweise wird die Menge an Klebstoff so gewählt, dass die elektrische Funktionseinheit vollständig vom Klebstoff umschlossen wird.

"Elektrische Funktionseinheiten" können sowohl elektrische Verbraucher wie Sensoren, Aktoren oder Beleuchtungselemente als auch elektrische Generatoren wie photovoltaische Zellen sein. Sie können ferner durch die Klebstoffschicht, durch das Substrat oder die Deckschicht hindurch kontaktiert werden. Vorzugsweise handelt es sich bei den elektrischen Funktionseinheiten um Anzeigevorrichtungen wie TFT- oder LED-Anzeigen, Sensorvorrichtungen wie Helligkeitssensoren, Temperatursensoren oder kapazitive Sensoren (sogenannte "Touch"-Sensoren) oder Heizvorrichtungen, insbesondere Vorrichtungen zum induktiven Heizen. Dann können ästhetisch sehr ansprechende Induktionskochfelder hergestellt werden.

In einer weiteren Ausführungsform des erfindungsgemäßen Verfahrens wird während des Schritts B) der Klebstoff 310 in Vibration gesetzt. Dieses kann durch Vibrieren der gesamten Anordnung oder aber durch Einführen eines Rüttlers direkt in den Klebstoff geschehen. Durch das Vibrieren erreicht man ein noch schnelleres Aufsteigen der Gasblasen im Klebstoff.

In einer weiteren Ausführungsform des erfindungsgemäßen Verfahrens werden während des Schritts B) das Substrat 100 und die Deckschicht 200 abwechselnd aufeinander zu und voneinander weg verschwenkt. Vorzugsweise wird das Zuschwenken schneller ausgeführt als das Aufschwenken. Diese pulsierende Vorgehensweise trägt ebenfalls dazu bei, dass Gasblasen aus dem Klebstoff schneller nach oben befördert werden, so dass sie nicht mehr im Spalt zwischen Substrat und Deckschicht eingeschlossen werden können.

In einer weiteren Ausführungsform des erfindungsgemäßen Verfahrens ist in Schritt A) und/oder in Schritt B) die Anordnung zumindest zeitweise gegenüber der Horizontalen geneigt. Dieses ist so zu verstehen, dass ein Paar von Ecken, welche jeweils durch eine Seitenkante und eine Unterkante gebildet werden (130/140 und 230/240 beziehungsweise 130/150 und 230/250) in der Vertikalen gesehen höher liegt als das andere Eckenpaar. Mit anderen Worten, die Anordnung wird um eine Achse gedreht, die auf dem Substrat 100, der Deckschicht 200 oder einer dazwischenliegenden Ebene senkrecht steht. Dann liegt ein flüssiger Klebstoff in einer unteren "Tasche" vor oder wird in diese "Tasche" eingefüllt. Dieses kann man sich auch beim automatisierten Befüllen mit Klebstoff zunutze machen, indem aus einem Füllrechen, dessen einzelne Leitungen individuell ansteuerbar sind, nach und nach Klebstoff in die Anordnung einfüllt. Auf diese Weise erreicht man einen geringeren Gasblasengehalt schon beim Einfüllen.

FIG. 7 zeigt einen Schichtenverbund in Querschnittsansicht mit einem Substrat 100, einer Deckschicht 200, einer ausgehärteten Klebstoffschicht 300 sowie eine zwischen Substrat 100 und Deckschicht 200 angeordnete, in die Klebstoffschicht eingebettete elektrische Funktionseinheit 400. Es ist vorgesehen, dass in dem Schichtenverbund, welcher selbstverständlich durch das erfindungsgemäße Verfahren herstellbar ist, das Substrat 100 einen mineralischen Werkstoff umfasst und die Deckschicht 200 ein Glas umfasst. Geeignete mineralische Werkstoffe sind beispielsweise Stein, Naturstein, Beton, Gips und dergleichen. Beispiele für geeignete Gläser sind E-Glas, S-Glas, M-Glas, Quarzglas, Borosilikatglas, Kronglas, Kalk-Natron-Glas, Floatglas, Flintglas und/oder Bleikristallglas. Das Glas kann gefärbt sein, aber eine transparente Glas-Deckschicht ist bevorzugt. Unter "Naturstein" versteht man ganz allgemein alle Gesteine, wie man sie in der Natur vorfindet. Bevorzugte Natursteine sind Granit, Marmor, Quarz, Quarzkomposit, Travertin, Sandstein, Schiefer und Achat.

"Elektrische Funktionseinheiten" können, wie bereits im Zusanunenhang mit dem erfindungsgemäßen Verfahren erwähnt, sowohl elektrische Verbraucher wie Sensoren, Aktoren oder Beleuchtungselemente als auch elektrische Generatoren wie photovoltaische Zellen sein. Sie können ferner durch die Klebstoffschicht, durch das Substrat oder die Deckschicht hindurch kontaktiert werden.

Geeignete Klebstoffe, die zu der ausgehärteten Klebstoffschicht 300 führen, sind insbesondere Zweikomponenten-Klebstoffe wie Epoxy- und Polyurethanharze sowie strahlenhärtende Klebstoffe wie (Meth)Acrylate und Urethan(meth)acrylate. Unter den Epoxy-Harzen sind solche mit cycloaliphatischen Polyaminhärtern bevorzugt. Generell ist es bevorzugt, dass die ausgehärtete Klebstoffschicht transparent (in vielen Produktdatenblättern auch als "optisch klar bezeichnet) ist.

Es ist vorgesehen, dass im Schichtenverbund der durchschnittliche Gehalt an in der Klebstoffschicht eingeschlossenen Gasblasen mit einer maximalen Ausdehnung von ≥ 100 µm weniger als 100 Gasblasen/m² beträgt. Der Gasblasengehalt kann beispielsweise mittels optischer Begutachtung und Zählen der Gasblasen ermittelt werden. Denkbar sind auch automatisierte Verfahren, welche den Schichtenverbund mittels Kamera und Software zur Bildverarbeitung überprüfen. Gasblasen mit einer maximalen Ausdehnung von ≥ 100 µm sind in der Regel mit dem bloßen Auge nicht mehr wahrnehmbar. Vorzugsweise beträgt ihr durchschnittlicher Gehalt weniger als 10 Gasblasen/m², mehr bevorzugt weniger als 1 Gasblasen/m². Je geringer der Gasblasengehalt ist, desto höher wird die Qualität des Schichtenverbundes vom Endverbraucher empfunden.

FIG. 8 zeigt einen Schichtenverbund in perspektivischer Ansicht. Hier sind zusätzlich zu FIG. 7 elektrische Kontaktierungen 410, 420 abgebildet, die von der elektrischen Funktionseinheit 400 bis zum Rand der Klebstoffschicht 300 hinausgeführt sind.

In einer Ausführungsform des Schichtenverbundes ist die elektrische Funktionseinheit 400 eine Anzeigevorrichtung, eine Sensorvorrichtung oder eine Heizvorrichtung. Vorzugsweise handelt es sich bei den elektrischen Funktionseinheiten um Anzeigevorrichtungen wie TFT- oder LED-Anzeigen, Sensorvorrichtungen wie Helligkeitssensoren, Temperatursensoren oder kapazitive Sensoren (sogenannte "Touch"-Sensoren) oder Heizvorrichtungen, insbesondere Vorrichtungen zum induktiven Heizen. Dann können die erfindungsgemäßen Schichtenverbunde ästhetisch sehr ansprechende Induktionskochfelder darstellen.

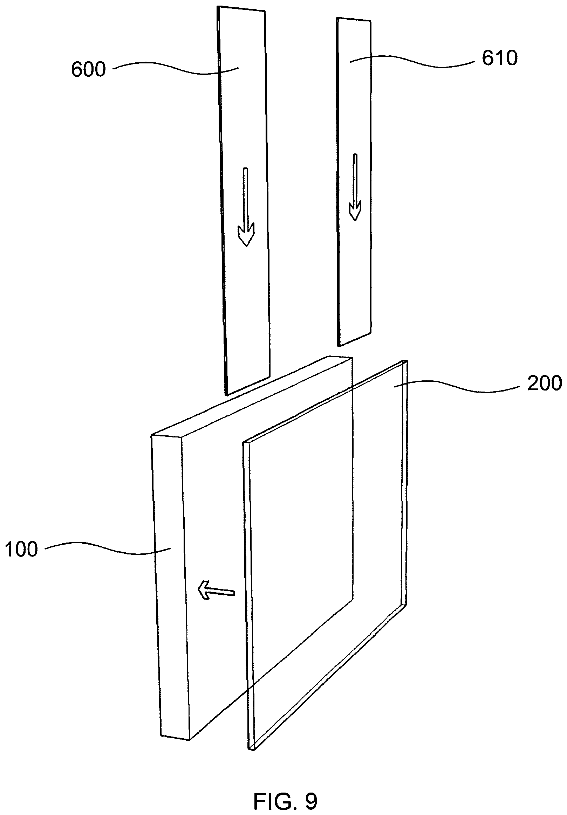

Die FIG. 9-21 zeigen einzelne Schritte in einer weiteren Variante des erfindungsgemäßen Verfahrens. Die geometrischen Deskriptoren von Substrat 100 und Deckschicht 200 sind die gleichen wie zu FIG. 1-5 ausgeführt. Zur besseren Übersicht werden sie in FIG. 9-21 nicht gesondert erwähnt.

Gemäß FIG. 9 werden Substrat 100 und Deckschicht aufrecht und parallel zueinander aufgestellt. Zwischen diese Baugruppen werden zwei Abstandshalter 600, 610 platziert. Diese Abstandshalter 600, 610 können beispielsweise eine Dicke von ≥0.5 mm bis ≤ 1.5 mm aufweisen. Die Dicke der Abstandshalter beeinflusst den Abstand zwischen Substrat 100 und Deckschicht 200 im fertigen Produkt.

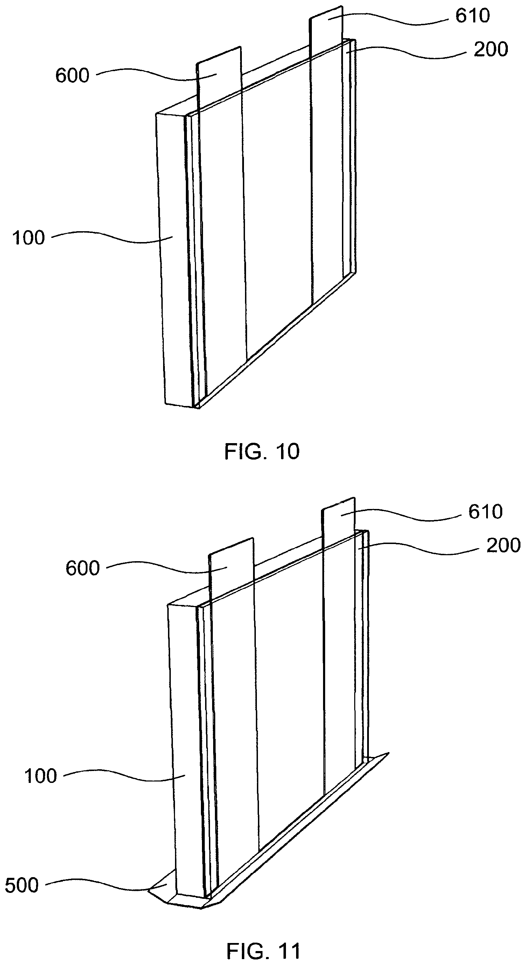

FIG. 10 zeigt die Anordnung von Substrat 100 und Deckschicht 200 mit eingelegten Abstandshaltern 600, 610. Die überstehenden Enden der ersten Dichtung 500 wurden umgeschlagen und mit Substrat 100 beziehungsweise Deckschicht 200 verklebt.

In FIG. 11 ist gezeigt, wie bei der Anordnung gemäß FIG. 10 zwischen der unteren Kante des Substrats 100 und der unteren Kante der Deckschicht 200 eine erste Dichtung 500 angebracht wird. Die erste Dichtung 500 in Form einer flexiblen oder elastischen Klebefolie verhindert, dass später eingefüllter Klebstoff aus dem durch die Abstandshalter 600, 610 bedingten Spalt zwischen Substrat 100 und Deckschicht 200 austritt.

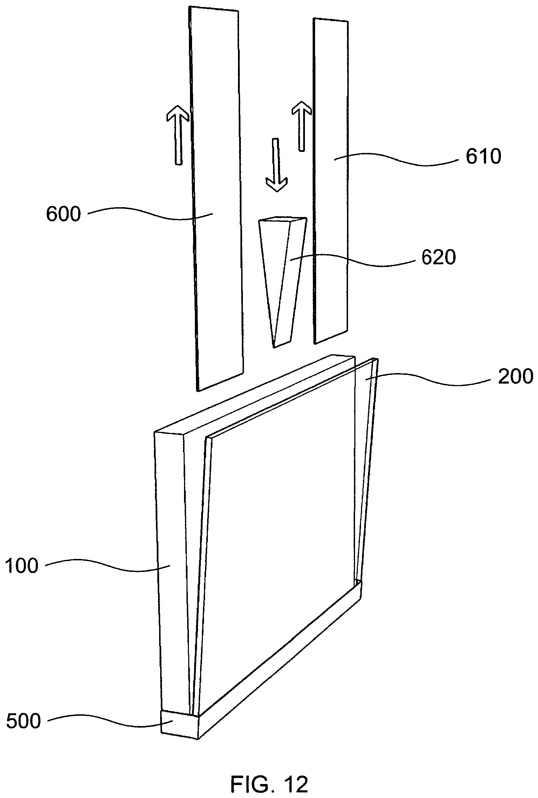

FIG. 12 zeigt, wie in der Anordnung gemäß FIG. 11 die Abstandshalter 600, 610 entfernt werden und ein keilförmiger Abstandshalter 620 zwischen Substrat 100 und Deckschicht 200 eingesetzt wird. Dieses hat zur Folge, dass Substrat 100 und Deckschicht 200 nun gegeneinander gekippt vorliegen.

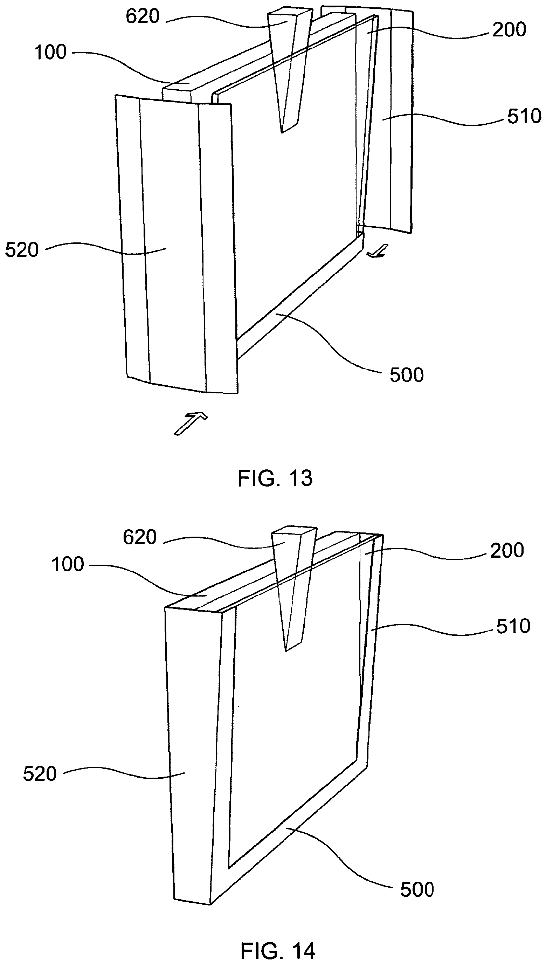

Als nächstes werden, wie in FIG. 13 gezeigt, eine zweite Dichtung 510 und eine dritte Dichtung 520 an den jeweiligen Seitenkanten der Anordnung angebracht. Auch die zweite Dichtung 510 und die dritte Dichtung 520 sind flexible oder elastische Klebefolien.

FIG. 14 zeigt, wie ausgehend von der Anordnung gemäß FIG. 13 die Enden der zweiten Dichtung 510 und dritten Dichtung 520 umgeschlagen wurden und mit Substrat 100 beziehungsweise Deckschicht 200 verklebt wurden.

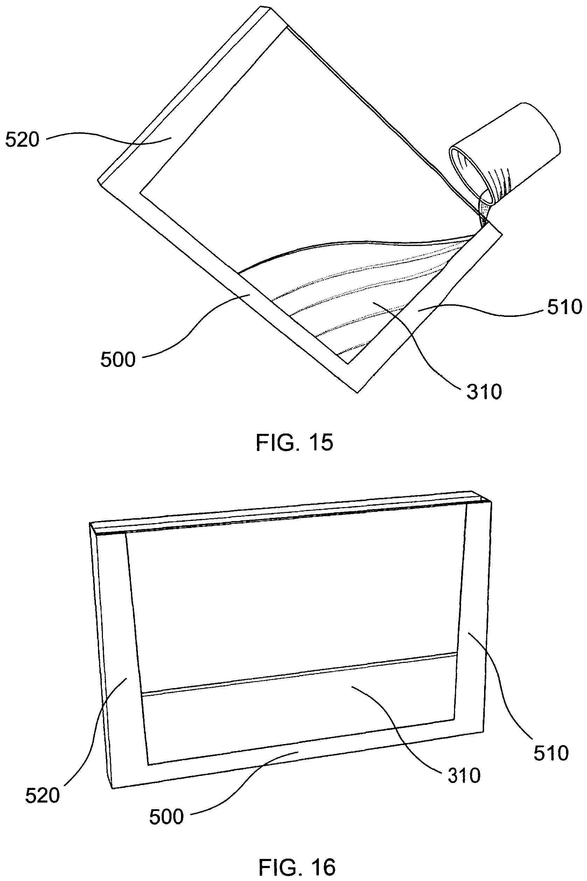

Gemäß FIG. 15 wird die zuvor erhaltene Anordnung seitlich verkippt und es wird Klebstoff 310 in den nicht durch Dichtungen verschlossenen Spalt zwischen Substrat 100 und Deckschicht 200 eingefüllt. Dadurch, dass die Anordnung seitlich verkippt ist, kann der eingefüllte Klebstoff schon das Klebeband der zweiten Dichtung 510 benetzen. Diese Benetzung hat sich für spätere Verfahrensschritte als vorteilhaft herausgestellt.

Die Anordnung aus FIG. 15 wird anschließend, wie in FIG. 16 dargestellt, wieder in eine aufrecht stehende Position gestellt. Der Klebstoff 310 fließt nun gleichmäßig in den unteren Teil des Volumens zwischen Substrat 100 und Deckschicht 200.

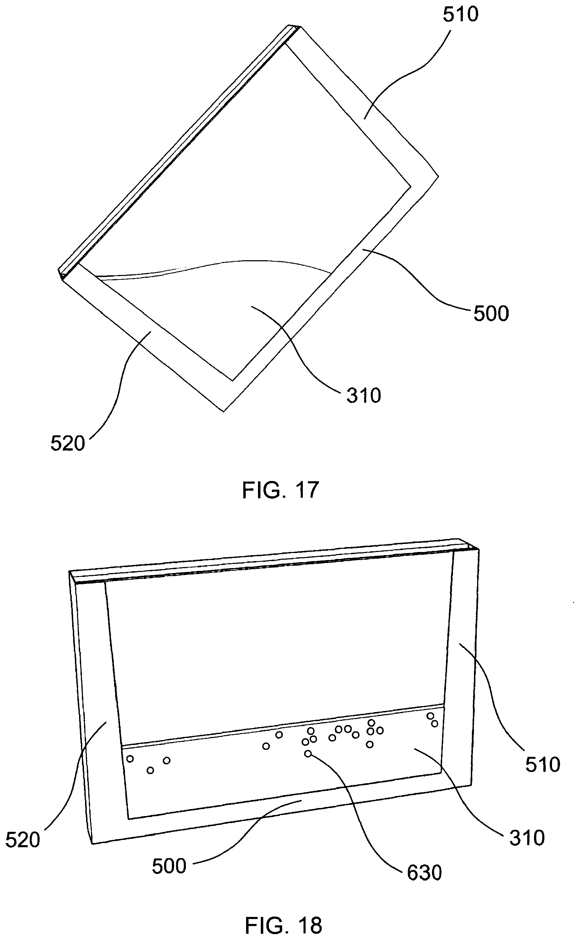

Damit auch das Klebeband der dritten Dichtung 520 mit Klebstoff 310 benetzt werden kann, wird die Anordnung wie in FIG. 17 dargestellt verkippt. Danach wird die Anordnung wieder in eine aufrecht stehende Position gestellt.

FIG. 18 zeigt, wie eventuell im Klebstoff 310 vorliegende Gasblasen 630 nach oben steigen und dadurch den Klebstoff 310 verlassen.

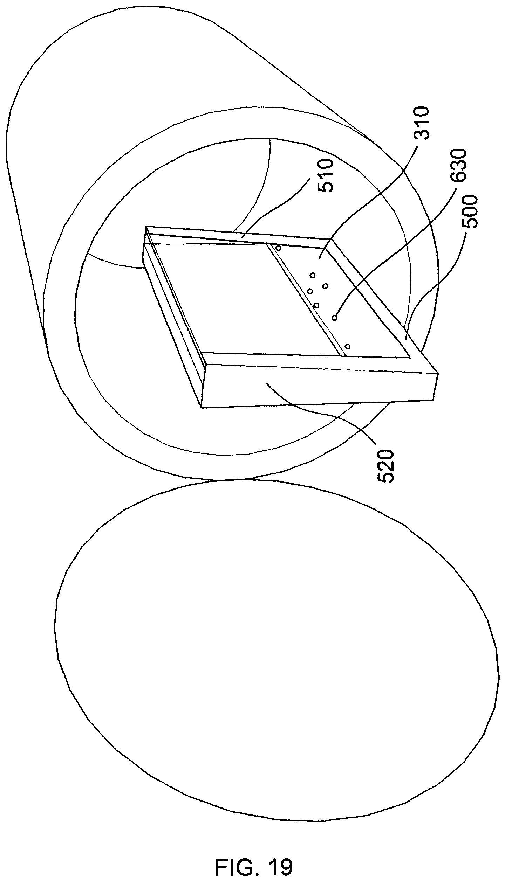

Wenn gewünscht, kann das Entgasen des Klebstoffs 310 auch unter Zuhilfenahme von Unterdruck geschehen. Dieses ist vorteilhaft, wenn kürzere Taktzeiten angestrebt werden und/oder wenn der eingefüllte Klebstoff eine hohe Viskosität aufweist. Eine solche Vakuumkammer samt Anordnung gemäß dem Verfahren ist schematisch in FIG. 19 gezeigt. Es ist Gegenstand einer Ausführungsform des erfindungsgemäßen Verfahrens, dass der eingefüllte Klebstoff 310 mit einem Unterdruck beaufschlagt wird. Der Druck (absolut) kann beispielsweise in einem Bereich von ≥1 mbar bis ≤ 800 mbar liegen.

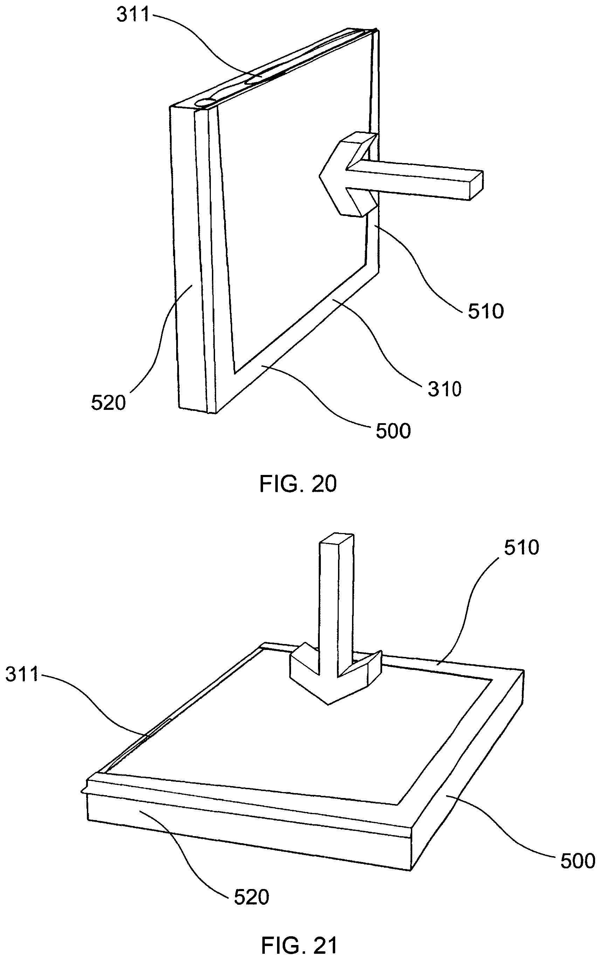

FIG. 20 zeigt, wie Substrat 100 und Deckschicht 200 in aufrecht stehender Form der Anordnung aufeinander zu verschwenkt werden. Der eingefüllte Klebstoff steigt nach oben. Ausgetretener, überschüssiger Klebstoff 311 kann abgestreift werden. Der in FIG. 20 gezeigte Pfeil symbolisiert den Druck, der auf Substrat 100 und Deckschicht 200 ausgeübt wird.

Es ist möglich, nach dem aufrecht stehenden Zusammenpressen von Substrat 100 und Deckschicht 200 die Anordnung horizontal abzulegen. Dieser Fall ist in FIG. 21 gezeigt. Der in FIG. 21 gezeigte Pfeil symbolisiert ebenfalls den Druck, der auf Substrat 100 und Deckschicht 200 ausgeübt wird. Wenn nach dem stehenden Verschwenken und Verkleben von Substrat 100 und Deckschicht 200 alle Gasblasen mit dem austretenden Klebstoff 310 ausgetragen wurden, kann unter Ausnutzung auch des Eigengewichtes von Substrat 100 beziehungsweise Deckschicht 200 der Klebstoff in der Horizontalen aushärten. Dieses ist Gegenstand einer bevorzugten Ausführungsform des erfindungsgemäßen Verfahrens, wonach Schritt B) durchgeführt wird, bis das Substrat 100 und die Deckschicht 200 parallel zueinander stehen und anschließend die erhaltene Anordnung derart gelagert wird, dass Substrat 100 und Deckschicht 200 mit ihren Hauptflächen horizontal ausgerichtet sind.

## Patentansprüche

1. Verfahren zur Herstellung eines Schichtenverbundes, wobei der Schichtenverbund ein Substrat (100), eine Deckschicht (200) und eine zwischen Substrat (100) und Deckschicht (200) angeordnete Klebstoffschicht (300, 310) umfasst und die Klebstoffschicht (300, 310) das Substrat (100) und die Deckschicht (200) zumindest teilweise kontaktiert, umfassend den Schritt:
A) Bereitstellen einer Anordnung, welche ein Substrat (100) und eine Deckschicht (200) umfasst, wobei
das Substrat (100) eine erste Substratseite (110) mit einer in vertikaler Richtung gesehen oberen Substratkante (120), einer in vertikaler Richtung gesehen unteren Substratkante (130), einer ersten Substrat-Seitenkante (140) und einer der ersten Substrat-Seitenkante gegenüberliegenden zweiten Substrat-Seitenkante (150) umfasst;
die Deckschicht (200) eine erste Deckschichtseite (210) mit einer in vertikaler Richtung gesehen oberen Deckschichtkante (220), einer in vertikaler Richtung gesehen unteren Deckschichtkante (230), einer ersten Deckschicht-Seitenkante (240) und einer der ersten Deckschicht-Seitenkante gegenüberliegenden zweiten Deckschicht-Seitenkante (250) umfasst;
die erste Substratseite (110) und die erste Deckschichtseite (210) in der Anordnung mit einem Winkel α einander zugewandt sind und eine Winkelhalbierende (1000) des Winkels α ausgebildet wird;
die obere Substratkante (120) und die obere Deckschichtkante (220) in der Anordnung einander gegenüber liegen;
die untere Substratkante (130) und die untere Deckschichtkante (230) in der Anordnung einander gegenüber liegen;
die erste Substrat-Seitenkante (140) und die erste Deckschicht-Seitenkante (240) in der Anordnung einander gegenüber liegen;
die zweite Substrat-Seitenkante (150) und die zweite Deckschicht-Seitenkante (250) in der Anordnung einander gegenüber liegen;
in der Anordnung der Abstand der oberen Substratkante (120) zur oberen Deckschichtkante (220) größer als der Abstand der unteren Substratkante (130) zur unteren Deckschichtkante (230) ist;
**dadurch gekennzeichnet, dass**
in der Anordnung zwischen der unteren Substratkante (130) und der unteren Deckschichtkante (230) eine erste Dichtung (500) vorgesehen ist, welche den Austritt von Fluiden zwischen unterer Substratkante (130) und unterer Deckschichtkante (230) verhindert;
in der Anordnung zwischen der ersten Substrat-Seitenkante (140) und der ersten Deckschicht-Seitenkante (240) eine zweite Dichtung (510) vorgesehen ist, welche den Austritt von Fluiden zwischen erster Substrat-Seitenkante (140) und erster Deckschicht-Seitenkante (240) verhindert;
in der Anordnung zwischen der zweiten Substrat-Seitenkante (150) und der zweiten Deckschicht-Seitenkante (250) eine dritte Dichtung (520) vorgesehen ist, welche den Austritt von Fluiden zwischen zweiter Substrat-Seitenkante (150) und zweiter Deckschicht-Seitenkante (250) verhindert;
so dass die Anordnung einen einseitig geöffneten Behälter zur Aufnahme von Fluiden ausbildet und in diesem Behälter weiterhin ein zur Aushärtung befähigter Klebstoff (310) vorliegt;
und dass das Verfahren weiterhin den Schritt umfasst:
B) Verschwenken des Substrats (100) und der Deckschicht (200) aufeinander zu, so dass der Abstand der oberen Substratkante (120) zur oberen Deckschichtkante (220) abnimmt und der Klebstoff (310) in Richtung der oberen Substratkante (120) und der oberen Deckschichtkante (220) bewegt wird;
wobei der Schritt B) derart durchgeführt wird, dass während zumindest eines Teils des Schritts B) die Winkelhalbierende (1000) des Winkels α gegenüber der Vertikalen einen Winkel von ≥ -45° bis ≤ 45° einnimmt.

2. Verfahren gemäß Anspruch 1, wobei Schritt B) durchgeführt wird, bis das Substrat (100) und die Deckschicht (200) parallel zueinander stehen und anschließend die erhaltene Anordnung derart gelagert wird, dass Substrat (100) und Deckschicht (200) mit ihren Hauptflächen horizontal ausgerichtet sind.

3. Verfahren gemäß Anspruch 1 oder 2, wobei der eingefüllte Klebstoff (310) mit einem Unterdruck beaufschlagt wird.

4. Verfahren gemäß einem oder mehreren der Ansprüche 1 bis 3, wobei das Substrat (100) einen mineralischen Werkstoff umfasst und/oder die Deckschicht (200) ein Glas umfasst.

5. Verfahren gemäß Anspruch 4, wobei der mineralische Werkstoff Granit, Marmor, Quarz, Quarzkomposit, Travertin, Sandstein, Schiefer oder Achat ist.

6. Verfahren gemäß einem oder mehreren der Ansprüche 1 bis 3, wobei das Substrat (100) eine elektrische Funktionseinheit umfasst und die Deckschicht (200) ein Glas umfasst.

7. Verfahren gemäß einem oder mehreren der Ansprüche 1 bis 6, wobei die erste Dichtung (500), die zweite Dichtung (510) und/oder die dritte Dichtung (520) in Form einer elastischen Folie ausgeführt sind.

8. Verfahren gemäß einem oder mehreren der Ansprüche 1 bis 6, wobei die erste Dichtung, die zweite Dichtung und/oder die dritte Dichtung in Form von elastomeren Flächenabschnitten ausgeführt sind, gegenüber denen das Substrat (100) und die Deckschicht (200) beweglich sind.

9. Verfahren gemäß einem oder mehreren der Ansprüche 1 bis 6, wobei die erste Dichtung, die zweite Dichtung und/oder die dritte Dichtung in Form eines fluidisch expandierbaren Dichtungselements ausgeführt sind, gegenüber denen das Substrat (100) und die Deckschicht (200) beweglich sind.

10. Verfahren gemäß einem oder mehreren der Ansprüche 1 bis 9, wobei weiterhin zwischen Substrat (100) und Deckschicht (200) eine elektrische Funktionseinheit (400) bereitgestellt wird.

11. Verfahren gemäß Anspruch 10, wobei die elektrische Funktionseinheit (400) eine Anzeigevorrichtung, Sensorvorrichtung oder Heizvorrichtung ist.

12. Verfahren gemäß einem oder mehreren der Ansprüche 1 bis 11, wobei während des Schritts B) der Klebstoff (310) in Vibration gesetzt wird.

13. Verfahren gemäß einem oder mehreren der Ansprüche 1 bis 12, wobei während des Schritts B) das Substrat (100) und die Deckschicht (200) abwechselnd aufeinander zu und voneinander weg verschwenkt werden.

14. Verfahren gemäß einem oder mehreren der Ansprüche 1 bis 13, wobei in Schritt A) und/oder in Schritt B) die Anordnung zumindest zeitweise gegenüber der Horizontalen geneigt ist.

15. Verfahren gemäß einem oder mehreren der Ansprüche 1 bis 14, wobei der Klebstoff (310) ein Epoxyharz, ein Polyurethanharz, ein (Meth)Acrylat oder ein Urethan(meth)acrylat ist.

## Claims

1. Method for producing a layered composite material, wherein said layered composite material comprises a substrate (100), a cover layer (200) and an adhesive layer (300, 310) disposed between the substrate (100) and the cover layer (200) and the adhesive layer (300, 310) at least partially contacts the substrate (100) and the cover layer (200), including the steps of:
A) providing an assembly which comprises a substrate (100) and a cover layer (200), wherein
the substrate (100) comprises a first substrate side (110) with an upper substrate edge (120) when viewed in the vertical direction, a lower substrate edge (130) when viewed in the vertical direction, a first substrate side edge (140) and a second substrate side edge (150) disposed opposite to the first substrate side edge;
the cover layer (200) comprises a first cover layer side (210) with an upper cover layer edge (220) when viewed in the vertical direction, a lower cover layer edge (230) when viewed in the vertical direction, a first cover layer side edge (240) and a second cover layer side edge (250) disposed opposite to the first cover layer side edge;
the first substrate side (110) and the first cover layer side (210) face to each other in the assembly under an angle α and a bisector (1000) of the angle α is formed;
the upper substrate edge (120) and the upper cover layer edge (220) are disposed opposite to each other in the assembly;
the lower substrate edge (130) and the lower cover layer edge (230) are disposed opposite to each other in the assembly;
the first substrate side edge (140) and the first cover layer side edge (240) are disposed opposite to each other in the assembly;
the second substrate side edge (150) and the second cover layer side edge (250) are disposed opposite to each other in the assembly;
in the assembly the distance between the upper substrate edge (120) and the upper cover layer edge (220) is larger than the distance between the lower substrate edge (130) and the lower cover layer edge (230);
**characterized in that**
in the assembly a first seal (500) is provided between the lower substrate edge (130) and the lower cover layer edge (230) which prevents the escape of fluids between the lower substrate edge (130) and the lower cover layer edge (230);
in the assembly a second seal (510) is provided between the first substrate side edge (140) and the first cover layer side edge (240) which prevents the escape of fluids between the first substrate side edge (140) and the first cover layer side edge (240);
in the assembly a third seal (520) is provided between the second substrate side edge (150) and the second cover layer side edge (250) which prevents the escape of fluids between the second substrate side edge (150) and the second cover layer side edge (250);
such that the assembly forms a one side open container for receiving fluids and further a curable adhesive (310) is provided in said container;
B) pivoting the substrate (100) and the cover layer (200) towards each other such that the distance between the upper substrate edge (120) and the upper cover layer edge (220) decreases and the adhesive (310) is moved towards the upper substrate edge (120) and the upper cover layer edge (220),
wherein step B) is carried out such that during at least a part of step B) the bisector (1000) of the angle α with respect to the vertical is in the range of ≥ -45° to ≤ 45°.

2. Method according to claim 1, wherein step B) is carried out until the substrate (100) and the cover layer (200) are parallel to one another and then the assembly obtained is deposited such that the major surfaces of the substrate (100) and the cover layer (200) are aligned horizontally.

3. Method according to claim 1 or 2, wherein the filled adhesive (310) is subjected to negative pressure.

4. Method according to one or more of claims 1 to 3, wherein the substrate (100) comprises a mineral material and/or the cover layer (200) comprises a glass.

5. Method according to claim 4, wherein the mineral material is granite, marble, quartz, quartz composite, travertine, sandstone, slate or agate.

6. Method according to one or more of claims 1 to 3, wherein the substrate (100) comprises an electrical functional unit and the cover layer (200) comprises a glass.

7. Method according to one or more of claims 1 to 6, wherein the first seal (500), the second seal (510) and/or the third seal (520) are implemented in the form of an elastic film.

8. Method according to one or more of claims 1 to 6, wherein the first seal, the second seal and/or the third seal are implemented in the form of elastomeric surface portions with respect to which the substrate (100) and the cover layer (200) are movable.

9. Method according to one or more of claims 1 to 6, wherein the first seal, the second seal and/or the third seal are implemented in the form of a fluidically expandable sealing member with respect to which the substrate (100) and the cover layer (200) are movable.

10. Method according to one or more of claims 1 to 9, wherein further an electrical functional unit (400) is provided between the substrate (100) and the cover layer (200).

11. Method according to claim 10, wherein the electrical functional unit (400) is a display device, a sensor device or a heating device.

12. Method according to one or more of claims 1 to 11, wherein in step B) the adhesive (310) is set in vibration.

13. Method according to one or more of claims 1 to 12, wherein in step B) the substrate (100) and the cover layer (200) are alternately pivoted toward each other and away from each other.

14. Method according to one or more of claims 1 to 13, wherein in step A) and/or in step B) the assembly is at least partly temporarily tilted with respect to the horizontal.

15. Method according to one or more of claims 1 to 14, wherein the adhesive (310) is an epoxy resin, a polyurethane resin, a (meth)acrylate or a urethane(meth)acrylate.

## Revendications

1. Procédé de fabrication d'un stratifié, le stratifié comprenant un substrat (100), une couche de couverture (200) et une couche d'agent adhésif (300, 310) placée entre le substrat (100) et la couche de couverture (200) et la couche d'agent adhésif (300, 310) étant en contact au moins partiel avec le substrat (100) et la couche de couverture (200), comprenant l'étape :
A) de mise à disposition d'un ensemble, qui comprend un substrat (100) et une couche de couverture (200),
le substrat (100) comprenant une première face de substrat (110) avec une arête de substrat (120) supérieure, vue dans la direction verticale, une arête de substrat (130) inférieure, vue dans la direction verticale, une première arête latérale de substrat (140) et une deuxième arête latérale de substrat (150) en vis-à-vis de la première arête latérale de substrat ;
la couche de couverture (200) comprenant une première face de couche de couverture (210) avec une arête supérieure de couche de couverture (220), vue dans la direction verticale, une arête inférieure de couche de couverture (230), vue dans la direction verticale, une première arête latérale de couche de couverture (240) et une deuxième arête latérale de couche de couverture (250) en vis-à-vis de la première arête latérale de couche de couverture ;
la première face de substrat (110) et la première face de couche de couverture (210) se faisant face dans l'ensemble avec une angle α et une bissectrice (1000) de l'angle α étant créée ;
l'arête supérieure de substrat (120) et l'arête supérieure de couche de couverture (220) étant situées en vis-à-vis dans l'ensemble ;
l'arête inférieure de substrat (130) et l'arête inférieure de couche de couverture (230) étant situées en vis-à-vis dans l'ensemble ;
la première arête latérale de substrat (140) et la première arête latérale de couche de couverture (240) étant situées en vis-à-vis dans l'ensemble ;
la deuxième arête latérale de substrat (150) et la deuxième arête latérale de couche de couverture (250) étant situées en vis-à-vis dans l'ensemble ;
dans l'ensemble, l'écart entre l'arête supérieure de substrat (120) et l'arête supérieure de couche de couverture (220) étant supérieur à l'écart entre l'arête inférieure de substrat (130) et l'arête inférieure de couche de couverture (230) ;
**caractérisé en ce que**
dans l'ensemble, entre l'arête inférieure de substrat (130) et l'arête inférieure de couche de couverture (230), est prévu un premier joint (500), lequel empêche la sortie de fluides entre l'arête inférieure de substrat (130) et l'arête inférieure de couche de couverture (230) ;
dans l'ensemble, entre la première arête latérale de substrat (140) et la première arête latérale de couche de couverture (240), est prévu un deuxième joint (510), lequel empêche la sortie de fluides entre la première arête latérale de substrat (140) et la première arête latérale de couche de couverture (240) ;
dans l'ensemble, entre la deuxième arête latérale de substrat (150) et la deuxième arête latérale de couche de couverture (250), est prévu un troisième joint (520), lequel empêche la sortie de fluides entre la deuxième arête latérale de substrat (150) et la deuxième arête latérale de couche de couverture (250) ;
de telle sorte que l'ensemble forme un réservoir ouvert d'un côté pour recevoir des fluides et que dans ledit réservoir est en outre présent un agent adhésif (310) apte à se solidifier ;
et **en ce que** le procédé comprend en outre l'étape:
B) de pivotement du substrat (100) et de la couche de couverture (200) l'un vers l'autre, de telle sorte que l'écart entre l'arête supérieure de substrat (120) et l'arête supérieure de couche de couverture (220) diminue et que l'agent adhésif (310) soit déplacé dans la direction de l'arête supérieure de substrat (120) et de l'arête supérieure de couche de couverture (220) ;
l'étape B) étant réalisée de telle sorte que pendant au moins une partie de l'étape B), la bissectrice (1000) de l'angle α par rapport à la verticale prend un angle de ≥ -45° à ≤ 45°.

2. Procédé selon la revendication 1, l'étape B) étant réalisée jusqu'à ce que le substrat (100) et la couche de couverture (200) soient debout parallèle l'un à l'autre et ensuite l'ensemble obtenu étant stocké de telle sorte que le substrat (100) et la couche de couverture (200) soient orientés horizontalement par leurs surfaces principales.

3. Procédé selon la revendication 1 ou 2, l'agent adhésif (310) introduit étant soumis à une dépression.

4. Procédé selon l'une quelconque ou plusieurs des revendications 1 à 3, le substrat (100) comprenant une matière minérale et/ou la couche de couverture (200) comprenant un verre.

5. Procédé selon la revendication 4, la matière minérale étant du granit, du marbre, du quartz, un composite de quartz, du travertin, du grès, du schiste ou de l'agate.

6. Procédé selon l'une quelconque ou plusieurs des revendications 1 à 3, le substrat (100) comprenant une unité fonctionnelle électrique et la couche de couverture (200) comprenant un verre.

7. Procédé selon l'une quelconque ou plusieurs des revendications 1 à 6, le premier joint (500), le deuxième joint (510) et/ou le troisième joint (520) étant réalisés sous la forme d'un film élastique.

8. Procédé selon l'une quelconque ou plusieurs des revendications 1 à 6, le premier joint, le deuxième joint et/ou le troisième joint étant réalisés sous la forme de segments de surface élastomères par rapport auxquels le substrat (100) et la couche de couverture (200) sont mobiles.

9. Procédé selon l'une quelconque ou plusieurs des revendications 1 à 6, le premier joint, le deuxième joint et/ou le troisième joint étant, réalisés sous la forme d'un élément d'étanchéité fluidiquement expansible, par rapport auquel le substrat (100) et la couche de couverture (200) sont mobiles.

10. Procédé selon l'une quelconque ou plusieurs des revendications 1 à 9, lors duquel on met à disposition par ailleurs, entre le substrat (100) et la couche de couverture (200) une unité fonctionnelle électrique (400).

11. Procédé selon la revendication 10, l'unité fonctionnelle électrique (400) étant un dispositif d'affichage, un dispositif de mesure ou un dispositif de chauffage.

12. Procédé selon l'une quelconque ou plusieurs des revendications 1 à 11, lors duquel, pendant l'étape B), on met l'agent adhésif (310) en vibration.

13. Procédé selon l'une quelconque ou plusieurs des revendications 1 à 12, lors duquel, pendant l'étape B), on fait pivoter le substrat (100) et la couche de couverture (200) alternativement l'un vers l'autre et l'un en direction opposée de l'autre.

14. Procédé selon l'une quelconque ou plusieurs des revendications 1 à 13, lors duquel pendant l'étape A) et/ou pendant l'étape B) l'ensemble est incliné au moins temporairement par rapport à l'horizontale.

15. Procédé selon l'une quelconque ou plusieurs des revendications 1 à 14, l'agent adhésif (310) étant une résine époxy, une résine de polyuréthane, un (méth)acrylate ou un uréthane (méth)acrylate.
